# EUROPEAN PATENT SPECIFICATION

(11) **EP 2 392 626 B1**
(45) Date of publication and mention of the grant of the patent: **19.12.2012**
(21) Application number: 11004123.3
(22) Date of filing: 18.05.2011
(51) Int. Cl.: C09D 183/04, C08L 83/04

(54) **Silicone resin composition for solar cell module, and solar cell module**
Silikonharzzusammensetzung für Solarzellenmodul sowie Solarzellenmodul
Composition de résine de silicone pour module de cellule solaire et module de cellule solaire

(30) Priority: 03.06.2010 JP 2010128027
(43) Date of publication of application: 07.12.2011
(73) Proprietor: Shin-Etsu Chemical Co., Ltd., Tokyo (JP)
(72) Inventor: Yamakawa, Naoki, Annaka-shi Gunma-ken (JP); Yaginuma, Atsushi, Annaka-shi Gunma-ken (JP)
(74) Representative: Wibbelmann, Jobst

(56) References cited:
- EP-A2- 0 350 951

## Description

### BACKGROUND OF THE INVENTION

### 1. Field of the Invention

The present invention relates to a silicone resin composition for solar cell modules, and more particularly, to a silicone resin composition suitable as a sealing material or adhesive for solar cell modules.

### 2. Description of the Related Art

Currently, the development of solar cells that convert sunlight into electrical energy is in progress as a representative form of clean energy, and the technology of solar cells is drawing the most attention. Examples of solar cell materials include single crystal silicon, polycrystalline silicon, amorphous silicon, amorphous silicon germanium, amorphous SiC, and other tetrahedral amorphous semiconductors, CdS, Cu₂S, and other Group II-VI compound semiconductors, SaAs, GaAlAs, and other Group III-V compound semiconductors.
Amorphous silicon solar cells, in particular, are expected to further develop in the future because they are thin, lightweight, and have flexibility such that the cell area can be easily increased, as well as provide reduced manufacturing costs.

Glass substrates have been previously used as substrates for solar cells; however, research and development of flexible solar cells that use plastic or metal films as substrates, which are superior in terms of lightweight, workability, and mass-production, are now in progress. In the structure of a solar cell module, a fluororesin, polymethyl methacrylate, polysulfone, polyether sulfone, polyvinyl chloride, polycarbonate, or the like, rather than a glass plate, is used as an outer layer; in particular, a tetrafluoroethylene (ETFE) sheet having excellent weatherability and translucency is used as an outer layer.

Sealing materials used for protecting and securing solar cells include ethylene-vinylacetate copolymer (EVA), vinyl chloride copolymer, polyvinyl alcohol (PVA), and polyvinyl butyral (PVB). Since these materials are all inferior in weatherability to silicone materials, silicone materials are used for applications that require long-term weatherability (see Japanese Patent Laid-open (kokai) No. S62-152183 , Japanese Patent Publication (Kokoku) No. S63-46783 , Japanese Unexamined Patent Application Publication No. 2007-527109).

EP 0 350 951 discloses a silicone rubber adhesive based on a hydrosilylation reaction and comprising hydrophobicized silica as well as methacryl- and epoxy-functional silane coupling agents.

However, previous silicone materials have had poor adhesion to ETFE films, and also have had problems in that the silicone material itself is broken by an external shock, finally leading to breakage of the solar cell.

Hence, there has been a desire for the development of a high-transparency slicone resin composition that has hardness and strength sufficient to withstand external shocks, and self-adheres to ETFE films, for use as a sealing material, adhesive, or the like used for flexible solar cells.

### SUMMARY OF THE INVENTION

The present invention has been accomplished in view of the above-described problems, and provides a high-transparency, addition-curable silicone resin composition that self-adheres to ETFE films, and has hardness and strength sufficiently high to withstand external shocks, and that can finally be suitably used as a sealing material or adhesive for a flexible solar cell module.

In order to achieve the above-described object, there is provided, according to the present invention, a silicone resin composition for solar cell modules including:
(A) an organopolysiloxane in a liquid state with a viscosity at 25°C of 10,000 mPa.s or more or in a solid state, which is represented by the following average composition formula (1):

   R¹ₙ (C₆H₅) ₘSiO [_{(4-n-m)/2}] (1)

   wherein each R¹ is the same or different, and is a substituted or unsubstituted monovalent hydrocarbon group; 0.1 to 80 mol% of all of R¹ are alkenyl groups; and n and m are each positive numbers that satisfy 1.0 ≤ n+m < 2.0 and 0.2 ≤ m/ (n+m) ≤ 0.95: 100 mass parts;
(B) an organohydrogenpolysiloxane containing, in each molecule, at least two hydrogen atoms bonded to a silicon atom, represented by the following average composition formula (2):

   R²ₐH_{b}SiO[_{(4-a-b)/2}] (2)

   wherein each R² is the same or different, and is a substituted or unsubstituted monovalent hydrocarbon group excluding an aliphatic unsaturated hydrocarbon group; and a and b are each positive numbers that satisfy 0 ≤ a < 4, 0 < b < 4, and 0 < a+b < 4: an amount such that the number of the hydrogen atoms bonded to a silicon atom in Component (B) is 0.5 to 5.0 per alkenyl group of the organopolysiloxane as Component (A);
(C) a hydrosilylation reaction catalyst: an effective amount;
(D) a (meth)acryloxyalkyl group-containing organic silicon compound: 0.01 to 10 mass parts; and
(E) an epoxy group-containing organic silicon compound: 0.01 to 10 mass parts.

The foregoing silicone resin composition for solar cell modules contains a polysiloxane having excellent weatherability as a principal component, has excellent transparency, has a high resin hardness after curing, has a resin strength that provides excellent shock resistance, and self-adheres to ETFE films. Therefore, this composition can be suitably used as a sealing material or adhesive for modules for flexible solar cells.

Preferably, the silicone resin composition for solar cell modules further includes:
(F) an organopolysiloxane represented by the following general formula (3):

   CH₂=CHR³₂SiO [R⁴₂SiO]n'SiR³₂CH=CH₂ (3)

   wherein R³ and R⁴ each independently represent a methyl or phenyl group; at least 10 mol% of R⁴ are phenyl groups; and n' is an integer of 3 or more: 0 to 200 mass parts per 100 mass parts of Component (A).

As described above, the silicone resin composition for solar cell modules of the present invention may include Component (F) in addition to Components (A) to (E) above. When the composition includes Component (F) shown above, it can impart an appropriate elasticity to the cured product thereof.

In this case, Component (D) is preferably a (meth)acryloxyalkyl-modified organopolysiloxane having a viscosity at 25°C of 5 to 10,000 mPa-s, and having a linear or cyclic organopolysiloxane structure.

Because the (meth)acryloxyalkyl-modified organopolysiloxane having a viscosity at 25°C of 5 to 10,000 mPa.s, and having a linear or cyclic organopolysiloxane structure acts as an active adhesive aid component, the silicone resin composition exhibits further improved adhesion.

Moreover, the present invention provides a solar cell module including solar cells sealed with a cured product of the resin composition.
Furthermore, the present invention provides a solar cell module including a coating of a cured product of the resin composition, the coating being formed on at least one surface of an outer layer material.

As described above, the silicone resin composition for solar cell modules of the present invention can be used for sealing thin-film solar cells, or for bonding a silicone rubber sealant and an outer surface material; and can also be used for sealing and bonding when reinforcing a resin sheet with fibers.

The silicone resin composition for solar cell modules of the present invention contains a polysiloxane having excellent weatherability as a principal component, has excellent transparency, has a high resin hardness after curing, has a resin strength that provides excellent shock resistance, and self-adheres to ETFE films. Therefore, this composition can be suitably used as a sealing material or adhesive for flexible solar cell modules, and can provide a flexible solar cell module.

### DETAILED DESCRIPTION OF THE PREFERRED EMBODIMENTS

The present invention will be described in greater detail below.
As described above, there has been a desire for the development of a silicone resin composition that has hardness and strength sufficient to withstand external shocks, and self-adheres to ETFE films.

As a result of extensive research, the present inventors found that when a silicone resin composition for solar cell modules includes:
(A) an organopolysiloxane in a liquid state with a viscosity at 25°C of 10,000 mPa.s or more or in a solid state, which is represented by the following average composition formula (1):

   R¹ₙ(C₆H₅)ₘSiO[_{(4-n-m)/2}] (1)

   wherein each R¹ is the same or different, and is a substituted or unsubstituted monovalent hydrocarbon group; 0.1 to 80 mol% of all of R¹ are alkenyl groups; and n and m are each positive numbers that satisfy 1.0 ≤ n+m < 2.0 and 0.2 ≤ m/ (n+m) ≤ 0.95: 100 mass parts;
(B) an organohydrogenpolysiloxane containing, in each molecule, at least two hydrogen atoms bonded to a silicon atom, represented by the following average composition formula (2):

   R²ₐH_{b}SiO[_{(4-a-b)/2}] (2)

   wherein each R² is the same or different, and is a substituted or unsubstituted monovalent hydrocarbon group excluding an aliphatic unsaturated hydrocarbon group; and a and b are each positive numbers that satisfy 0 ≤ a < 4, 0 < b < 4, and 0 < a+b < 4: an amount such that the number of the hydrogen atoms bonded to a silicon atom in Component (B) is 0.5 to 5.0 per alkenyl group of the organopolysiloxane as Component (A);
(C) a hydrosilylation reaction catalyst: an effective amount;
(D) a (meth)acryloxyalkyl group-containing organic silicon compound: 0.01 to 10 mass parts; and
(E) an epoxy group-containing organic silicon compound: 0.01 to 10 mass parts,
the composition can serve as a high-transparency silicone resin composition that, after curing, has hardness and strength sufficient to withstand external shocks, and self-adheres to ETFE films.

Each of the components will be detailed below.

### Component (A)

Component (A) is an essential component of the silicone resin composition of the present invention, and is an organopolysiloxane in a liquid state with a viscosity at 25°C of 10,000 mPa·s or more, and preferably 100,000 mPa.s or more, or in a solid state, which is represented by the following average composition formula (1). More preferably, Component (A) is an organopolysiloxane in a liquid state with a viscosity of 100,000 mPa.s to 10,000,000 Pa·s, or in a solid state at 25°C which has a melting point or is soluble in a solvent. If Component (A) has a viscosity at 25°C of less than 10,000 mPa.s, a hardness and strength necessary for the silicone resin cannot be obtained, and adhesion will also be poor. When the organopolysiloxane is liquid, the viscosity is measured using a rotational viscometer.

R¹n (C₆H₅) mSiO [_{(4-n-m)/2}] (1)

wherein each R¹ is the same or different, and is a substituted or unsubstituted monovalent hydrocarbon group; 0.1 to 80 mol% of all of R¹ are alkenyl groups; and n and m are each positive numbers that satisfy 1.0 ≤ n+m < 2.0 and 0.2 ≤ m/ (n+m) ≤ 0.95.

As can be understood from 1.0 ≤ n+m < 2.0 in average composition formula (1), this organopolysiloxane has a branched or three-dimensional network structure containing, in its molecule, one or more of at least R¹SiO_{3/2} units, (C₆H₅)SiO_{3/2} units, and SiO_{4/2} units.

In Formula (1), each R¹ is the same or different, and is a substituted or unsubstituted monovalent hydrocarbon group. Specific examples of monovalent hydrocarbon groups include; saturated hydrocarbon groups such as alkyl groups such as methyl, ethyl, propyl, isopropyl, butyl, tert-butyl, and hexyl groups, cycloalkyl groups such as cyclohexyl groups; unsaturated hydrocarbon groups such as aryl groups excluding phenyl groups, such as tolyl, xylyl, and naphthyl groups, aralkyl groups such as benzyl and phenylethyl groups, alkenyl groups such as vinyl, allyl, propenyl, isopropenyl, and butenyl groups; and halogenated hydrocarbon groups such as 3,3,3-trifluoropropyl groups.
Among these, R¹ other than the alkenyl groups is preferably a methyl group, and the alkenyl groups are preferably vinyl groups.

In Formula (1), it is necessary that 0.1 to 80 mol%, and preferably 0.5 to 50 mo1%, of all of R¹ be alkenyl groups. If the alkenyl content is less than 0.1 mol%, a hardness necessary for the silicone resin cannot be obtained; whereas if the alkenyl content exceeds 80 mol%, there are too many crosslinking points to be closs-lineked, making the silicone resin brittle. Each of n and m is a positive number that satisfies 1 ≤ n+m < 2.0, 0.2 ≤ m/ (n+m) ≤ 0.95, and preferably 0.3 ≤ m/ (n+m) ≤ 0.8. If n+m is less than 1, or 2 or more, a necessary hardness and strength cannot be obtained. Moreover, if the phenyl content falls outside this range, a hardness and strength necessary for the silicone resin cannot be obtained, and high transparency cannot also be obtained.
Component (A) can be obtained according to a known process that involves hydrolysis and condensation of an alkoxysilane or chlorosilicane. Component (A) may contain alkoxy or silanol groups within a range that does not impair the purpose of the present application.

### Component (B)

Component (B) is an organohydrogenpolysiloxane containing, in each molecule, at least two hydrogen atoms bonded to a silicon atom, represented by the following average composition formula (2):

R²ₐH_{b}SiO [_{(4-a-b)/2}] (2)

wherein each R² is the same or different, and is a substituted or unsubstituted monovalent hydrocarbon group excluding an aliphatic unsaturated hydrocarbon group; and a and b are each positive numbers that satisfy 0 ≤ a < 4, 0 < b < 4, and 0 < a+b < 4; and preferably 0.7 ≤ at 2.1, 0.01 ≤ b 1.0, and 0.8 ≤ a+b ≤ 2.6.

That is, Component (B) is an organic silicon compound having at least two hydrogen atoms bonded to a silicon atom (i.e., SiH groups) per molecule, and having no aliphatic unsaturated groups (a SiH group-containing organic compound). Component (B) acts as a crosslinking agent by undergoing a hydrosilylation addition reaction with Component (A).

Components (B) may be used alone or in a combination of two types of more. Any known compound can be used as Component (B) as long as it is a silicon compound represented by Formula (2) above having at least two SiH groups per molecule.
Each R² which is an organic group bonded to silicon in Component (B), is the same or different, and is a substituted or unsubstituted monovalent hydrocarbon group excluding an aliphatic unsaturated hydrocarbon group. Specific examples of R² include unsubstituted monovalent hydrocarbon groups having no aliphatic unsaturated groups; and monovalent hydrocarbon groups having no aliphatic unsaturated groups and substituted with halogen atoms (for example, chlorine, bromine, and fluorine atoms), alkoxy groups (for example, methoxy, ethoxy, propoxy, and butoxy groups), and the like, which have no adverse effects on the storage stability and curing of the composition of the present invention.

Examples of such monovalent hydrocarbon groups include C1-C6 alkyl groups, C1-C4 haloalkyl groups, and C6-C10 aryl groups, whose specific examples have been mentioned as unsubstituted or substituted monovalent hydrocarbon groups for R¹ in Component (A) represented by Formula (1). The organic group is preferably a C1-C6 alkyl group or C6-C10 aryl group, and more preferably a methyl or phenyl group.

As long as Component (B) is an organohydrogenpolysiloxane represented by Formula (2) above having at least two SiH groups per molecule, the molecular structure of the organohydrogenpolysiloxane is not particularly limited. Any of various organohydrogenpolysiloxanes that have previously been produced are usable, such as those having linear, cyclic, branched, or three-dimensional network (resin-like) structures.

The organohydrogenpolysiloxane contains at least two SiH groups (typically about 2 to 300), and preferably three or more SiH groups (for example, 3 to 200, and more preferably 4 to 100), per molecule. When the organohydrogenpolysiloxane has a linear or branched structure, these SiH groups may be located only at the ends of the molecular chain, or at the non-end portion of the molecular chain, or both of them.

The number of silicon atoms in each molecule of the organohydrogenpolysiloxane (the polymerization degree) is preferably 2 to 1,000, more preferably 3 to 200, and still more preferably about 4 to 100. Moreover, the organohydrogenpolysiloxane is preferably liquid at 25°C, and has a viscosity at 25°C of preferably about 1 to 1,000 mPa·s, and more preferably about 10 to 100 mPa·s, as measured using a rotational viscometer.

It is necessary to use Component (B) in an amount sufficient to cure the composition of the present invention in the presence of a hydrosilylation catalyst as Component (C), such that the molar ratio of the SiH groups in Component (B) relative to the alkenyl groups in Component (A) is 0.5 to 5, and preferably 0.5 to 2.

### Component (C)

Any hydrosilylation catalyst may be used as the hydrosilylation catalyst of Component (C), as long as it promotes the hydrosilylation addition reaction between the aliphatic unsaturated groups bonded to silicon atoms in Component (A) and the SiH groups in Component (B). Components (C) may be used alone or in a combination of two types or more. Examples of Components (C) include platinum-group metals such as platinum, palladium, and rhodium; coordination compounds of chloroplatinic acid, alcohol-modified chloroplatinic acid or chloroplatinic acid with olefins, vinylsiloxane, or acetylene compounds; and platinum-group metal compounds such as tetrakis(triphenylphosphine)palladium and chlorotris(triphenylphosphine)rhodium. Platinum compounds are particularly preferred.
Component (C) may be used in an amount effective as a hydrosilylation catalyst, which is preferably 0.1 to 1,000 ppm, and more preferably 1 to 500 ppm, when calculated as the mass amount of the platinum-group metal element based on the total mass amount of Components (A) and (B).

### Component (D)

Examples of (meth)acryloxyalkyl group-containing organic silicon compounds for use as Component (D) include: (meth)acryloxyalkyl-modified organopolysiloxanes having viscosities at 25°C of 5 to 10,000 mPa·s, and having linear or cyclic organopolysiloxane structures; and hydrolyzable silyl group-containing (meth)acryloxyalkylsilane compounds. (Meth)acryloxyalkyl-modified organopolysiloxanes are preferred. These components act as active adhesive aid components.

The (meth)acryloxyalkyl-modified organopolysiloxane preferably has a viscosity at 25°C of 5 to 10,000 mPa·s (cp), more preferably 5 to 5,000 mPa·s, and still more preferably 10 to 1,000 mPa·s.
Examples of hydrolyzable silyl group-containing (meth)acryloxyalkylsilane compounds include (meth)acryloxy group-containing silane coupling agents, which contain (meth)acryloxy groups (for example, γ-acryloxypropyl groups and γ-methacryloxypropyl groups) and alkoxysilyl groups (for example, trimethoxysilyl groups, triethoxysilyl groups, and methyldimethoxysilyl groups).

Components (D) may be used alone or in a combination of two types or more.
The amount of Component (D) per 100 mass parts of the organopolysiloxane as Component (A) is 0.01 to 10 mass parts, preferably 0.1 to 3 mass parts, and still more preferably 0.2 to 2 mass parts. If the amount of Component (D) is less than 0.01 mass part, adhesion cannot be satisfactorily improved; whereas if the amount of Component (D) exceeds 10 mass parts, the balance of the three-dimensional crosslinking reaction by the addition reaction of Components (A) and (B) will be lost, resulting in an insufficient rubber hardness.

### Component (E)

Examples of epoxy group-containing organic silicon compounds for use as Component (E) include linear or cyclic epoxyalkyl-modified organopolysiloxanes and hydrolyzable silyl group-containing epoxyalkylsilane compounds (epoxy group-containing silane coupling agents). These components act as effective adhesive aid components in conjunction with Component (D).
Preferred Examples of Components (E) include epoxy group-containing alkoxysilanes such as γ-glycidoxypropyltrimetoxysilane and 3,4-epoxycyclohexyl ethyltrimethoxysilane, epoxy group-containing organopolysiloxanes having vinyl and/or alkoxy groups, and epoxy group-containing organopolysiloxanes having hydrogen atoms bonded to silicon atoms.

Specific examples of the epoxy group-containing organopolysiloxanes include the following compounds.

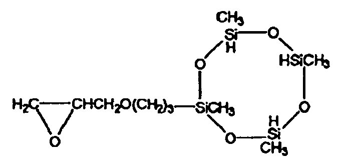

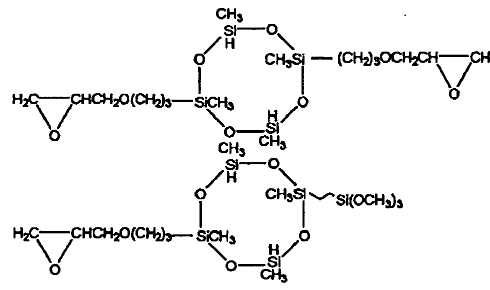

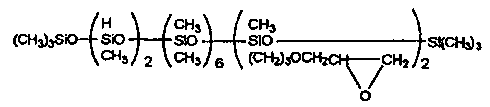

Further, the above-mentioned epoxy group-containing organopolysiloxanes have a viscosity at 25°C of 5 to 10,000 mPa·s (cp), preferably 5 to 5,000 mPa·s, and more preferably 10 to 1,000 mPa^{.}s.
Components (E) may be used alone or in a combination of two types or more.

The amount of Component (E) per 100 mass parts of the organopolysiloxane of Component (A) is 0.01 to 10 mass parts, preferably 0.1 to 3 mass parts, and more preferably 0.2 to 2 mass parts. If the amount of Component (E) is less than 0.01 mass part, adhesion cannot be satisfactorily improved; whereas if the amount of Component (E) exceeds 10 mass parts, the balance of the three-dimensional crosslinking reaction by the addition reaction of Components (A) and (B) will be lost, resulting in an insufficient rubber hardness.

### Other Components

While the silicone resin composition for solar cell modules of the present invention includes the above-described Components (A) to (E) as essential components, when the composition includes Component (F) described below in addition to these components, the composition can impart an appropriate elasticity to the cured product thereof. Components (F) may be used alone or in a combination of two types or more.

### Component (F)

Component (F) is an organopolysiloxane represented by the following general formula (3):

CH₂=CHR³₂SiO [R⁴₂SiO] n'SiR³₂CH=CH₂ (3)

wherein R³ and R⁴ each independently represent a methyl or phenyl group; at least 10 mol% of R⁴ are phenyl groups; and n' is an integer of 3 or more. That is, Component (F) is a linear organopolysiloxane having vinyl groups at both ends of the molecule. With respect to organic groups of this organopolysiloxane other than vinyl groups are methyl and phenyl groups, and at least 10 mol% of R⁴ are phenyl groups. When 10 mol% or more of R⁴ are phenyl groups, there is no risk of impairing high transparency due to poor compatibility of Component (F) with Component (A). Moreover, n', which reflects the degree of polymerization in the general formula (3) above, is an integer of 3 or more.
The amount of Component (F) may be suitably selected according to the degree of elasticity to be imparted to the cured product. When Component (F) is used, the amount of Component (F) per 100 mass parts of Component (A) is preferably 1 to 200 mass parts, and particularly preferably 3 to 100 mass parts. If the amount of Component (F) is too small, the effect of using the component may be insufficient; whereas if the amount is too great, the hardness of the cured product obtained may be too low.

The silicone resin composition for solar cell modules of the present invention may also contain other optional components in addition to Component (F) within a range that does not impair the purpose of the present invention. Specific examples of such components will be described below. Each of these optional components may be used alone or in a combination of two types or more.

### Fillers

The silicone resin composition for solar cell modules of the present invention may contain, in addition to the essential components, various fillers within a range that does not impair the transparency, for the purpose of improving the strength. Specific examples of fillers include nanoparticle of titanium dioxide, zinc oxide, zirconium silicate, and fumed silica. Among various types of fumed silica, particularly fumed silica having a specific surface area according to the BET method of about 130 m²/g or more, and particularly about 200 to 400 m²/g, can exhibit effects as a reinforcing material without lowering the transparency. Such fine-powder silica may be used as is; however, in order to impart good fluidity to the silicone resin composition for solar cell modules of the present invention, it is preferred to use silica that is treated with an organosilicon compound such as a methylchlorosilane, dimethylpolysiloxane, or hexamethyldisilazane.
In the case of, for example, the above-described reinforcing filler, the filler can be used in an amount of about 0.1 to 20 mass parts, and particularly 1 to 5 mass parts, per 100 mass parts of Component (A).

### • Adhesion-Imparting Agent

The silicone resin composition for solar cell modules of the present invention may contain an adhesion-imparting agent other than Components (D) and (E), in order to enhance the adhesion to a plastic or metal adherend. Specific examples include (alkoxy) silyl-modified products of triallyl isocyanurate, siloxane derivatives thereof, various types of silica having hydrolyzable groups, and polysiloxane compounds. These optional components can typically be added within a range that does not impair the effects of the present invention. For example, the amount of these optional components per 100 mass parts of Component (A) may preferably be 0.1 to 20 mass parts, and more preferably about 0.2 to 5 mass parts. Further, the adhesion-imparting agents mentioned above may be used together with titanium compounds such as tetraethyl titanate, tetrapropyl titanate, tetrabuthyl titanate, and titanium acetylacetonate; aluminium compounds such as aluminum ethylacetoacetate diisopropylate, aluminum tris(ethylacetoacetate), alkylacetoacetate aluminum diisopropylate, and aluminum tris(acetylacetonate); and zirconium compounds such as zirconium acetylacetonate, zirconium butoxyacetylacetonate, zirconium bis-acetylacetonate, and zirconium ethylacetoacetate.

### • Addition-Reaction Control Agent

An addition-reaction control agent can be added to the composition of the present invention, in order to ensure a pot life. The compound for controlling the addition reaction is not particularly limited as long as it is capable of inhibiting the curing of the hydrosilylation catalyst as Component (C), and any previously known compound is usable. Specific examples of such compounds include phosphorus-containing compounds such as triphenyl phosphine; nitrogen-containing compounds such as tributylamine, tetramethylethylenediamine, and benzotriazol; sulfur-containing compounds; acetylenic compounds such as acetylene alcohols (for example, 1-ethynylcyclohexanol and 3,5-dimethyl-1-hexyn-3-ol); compounds containing two or more alkenyl groups; hydroperoxy compounds; and maleic acid derivatives.
The degree of the curing inhibition effect provided by the addition-reaction control agent differs depending on the chemical structure of the control agent. Thus, it is preferred to optimally adjust the amount of each addition-reaction control agent used. The addition of an optimal amount of the addition-reaction control agent can further improve the long-term storage stability at room temperature and thermosetting property of the composition.
The silicone resin composition for solar cell modules after being cured for 1 hour at 120°C preferably has a Shore D hardness of 40 or more, and particularly preferably 40 to 90.

The silicone resin composition for solar cell modules of the present invention can be suitably used to, for example, seal solar cells of a solar cell module, or bond an outer layer material.
One specific method is to apply the silicone resin composition for solar cell modules of the present invention between a substrate (a cell) and an outer layer material, and cure the composition, for sealing and securing thin films that work as solar cells, i.e., solar cells. In this case, the thickness of the sealing layer is preferably 5 µm to 3 mm, and particularly preferably 10 µm to 1 mm.
The silicone resin composition of the present invention can also be used as an adhesive-coating in the following manner: The periphery of a solar cell is coated with a low-hardness silicone rubber composition; the composition of the present invention is applied to the coated surface; and an outer layer material, for example, ETFE (tetrafluoroethylene), is placed on the coated surface and bonded to the solar cell through the cured product of the silicone resin composition of the present invention. In this case, the low-hardness silicone rubber composition used is typically, for example, a dimethyl silicone type or phenylmethyl silicone type addition-curable potting adhesive.
Further, on a solar cell coated with a low-hardness silicone rubber composition, an outer layer having an outer layer material including two or more layers that are bonded using the composition of the present invention may be formed.

Moreover, the silicone resin composition of the present invention can also be used for the following purpose: When reinforcing an outer layer material with fibers such as a glass for the purpose of reinforcement, the silicone resin composition of the present invention is applied between resin sheets to bond these sheets, thus preparing a resin sheet having increased reinforcement while maintaining flexibility and transparency, and the resin sheet is used as an outer layer material of a solar cell coated with a silicone rubber composition.

Examples of methods for applying the silicone resin composition for solar cell modules of the present invention include flow coating, spray coating, dip coating, knife coating, screen coating, and transfer coating. Flow coating is preferred for sealing solar cells; and transfer coating is preferred for bonding, for example, a silicone rubber sealant and an outer surface material, or for sealing and bonding when reinforcing a resin sheet with fibers.

The silicone resin composition for solar cell modules of the present invention can be cured using a known curing method under known curing conditions. Specifically, the composition can typically be cured by heating at 80 to 150°C, and preferably at 100 to 120°C. The heating time is preferably from about 5 minutes to 1 hour, and particularly preferably from about 10 to 30 minutes.

### Examples

The present invention will hereinafter be described in detail, referring to preparation examples, examples and comparative examples; however, the invention is by no means limited to the following examples.

### (Preparation Example 1) Preparation of Silicone Resin Composition 1

100 g of a solid composition of the following average composition (1') for use as Component (A) of the present invention obtained by co-hydrolysis of phenyltrichlorosilane, diphenyldichlorosilane, and methylvinyldichlorosilane was mixed with 50 g of a silicone oil of the following average composition (2') for use as Component (B) of the present invention, giving Silicone Solution 1 having a viscosity at 25°C of 1,500 mPa·s. The molar ratio of the Si-H groups in Component (B) relative to the alkenyl groups in Component (A) is 0.9.

[(CH₃) (CH₂=CH) SiO]₆.₅ [(C₆H₅)₂SiO]₂.₅ [(C₆H₅) SiO_{3/2}]₇ (1')

[(CH₃)₃ SiO_{1/2}]₂ [(C₆H₅)₂SiO]₂ [(CH₃) HSiO]₂ (2')

To the thus-prepared 100 g of Silicone Solution 1 was added 0.5 g of a dimethyldiphenylsilicone oil solution of chloroplatinic acid (platinum content: 1%) for use as Component (C), followed by the addition of 1 g of Compound X represented by the formula shown below for use as Component (D), and 2 g of Compound Y represented by the formula shown below for use as Component (E), giving Silicone Resin Composition 1.

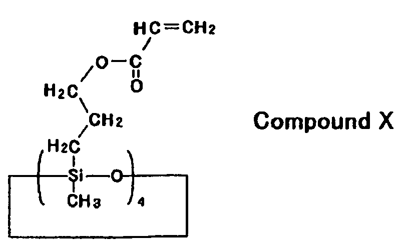

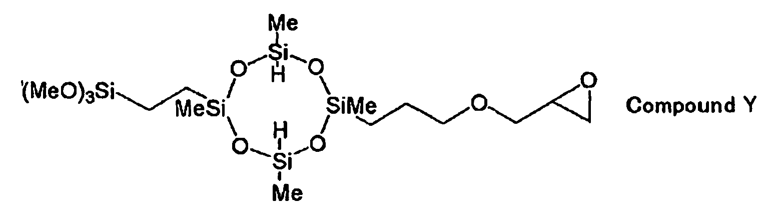

### (Preparation Example 2) Preparation of Silicone Resin Composition 2

To the 100 g of Silicone Solution 1 used in Preparation Example 1 was added 0.5 g of a dimethyldiphenylsilicone oil solution of chloroplatinic acid (platinum content: 1%) for use as Component (C), followed by the addition of 1 g of γ-methacryloxypropyltrimethoxysilane for use as Component (D), and 2 g of Compound Y above for use as Component (E), giving Silicone Resin Composition 2.

### (Preparation Example 3) Preparation of Silicone Resin Composition 3

To the 100 g of Silicone Solution 1 used in Preparation Example 1, 25 g of a silicone oil represented by average composition formula (3') shown below for use as Component (F) was added, and 0.5 g of a dimethyldiphenylsilicone oil solution of chloroplatinic acid (platinum content: 1%) for use as Component (C) was added, followed by the addition of 1 g of γ-methacryloxypropyltrimethoxysilane for use as Component (D), and 2 g of Compound Y above for use as Component (E), giving Silicone Resin Composition 3.

CH₂=CH (CH₃)₂Si [(CH₃)₂ SiO]₂₀ [(C₆H₅)₂ SiO]₁₀ Si (CH₃)₂ CH=CH₂ (3')

### (Comparative Preparation Example 1) Preparation of Silicone Resin Composition 4

To the 100 g of Silicon Solution 1 used in Preparation Example 1 was added 0.5 g of a dimethyldiphenylsilicone oil solution of chloroplatinic acid (platinum content: 1%), followed by the addition of 1 g of γ-methacryloxypropyltrimethoxysilane, giving Silicone Resin Composition 4.

### (Comparative Preparation Example 2) Preparation of Silicone Resin Composition 5

To the 100 g of Silicon Solution 1 used in Preparation Example 1 was added 0.5 g of a dimethyldiphenylsilicone oil solution of chloroplatinic acid (platinum content: 1%), followed by the addition of 2 g of Compound Y above, giving Silicone Resin Composition 5.

### (Comparative Preparation Example 3) Preparation of Silicone Resin Composition 6

0.5 g of a dimethyldiphenylsilicone oil solution of chloroplatinic acid (platinum content: 1%) was added to 100 g of a silicone resin obtained by mixing 25 g of dimethylpolysiloxane whose viscosity was 50 mPa·s and having terminal vinyldimethylsiloxy groups, and 75 g of a compound represented by the average composition formula shown below; followed by the addition of 5.1 g of the average composition [(CH₃)₃ SiO_{1/2}]₂ [(CH₃) HSiO]₈, 1 g of Compound X above, and 2 g of Compound Y above, giving Silicone Resin Composition 6.

[(CH₃)₃ SiO_{1/2}]₄ [(CH₃)₂ (CH₂=CH) SiO_{1/2}]_{0.6} [SiO₂]_{5.5}

### (Examples 1 to 3 and Comparative Examples 1 to 3)

Each of Silicone Resin Compositions 1 to 6 prepared in Preparation Examples 1 to 3 and Comparative Preparation Examples 1 to 3 shown above was evaluated according to each of the following testing methods.
- Adhesion test: specimens were prepared by adhering each of the above-prepared silicone resin compositions between ETFE sheets, and by curing the composition for 1 hour at 120°C; the peel adhesive strength (N/cm) of each specimen was measured, and the failure of the specimen was examined.
- Shock resistance: specimens were prepared by adhering each of the above-prepared silicone resin compositions between ETFE sheets, and by curing the composition for 1 hour at 120°C; the upper surface of the ETFE of each specimen was scratched with a sharp tip of a metal bar, and the presence or absence of cracks generated in the resin was examined.
- Hardness: Each of the above-prepared silicone resin compositions was cured for 1 hour at 120°C, and 2 mm sheets of the cured composition were placed in three layers; the hardness was measured using a Shore D durometer. The evaluation results are shown below.

**[Table 1]**

| | Ex. 1 (Composition 1) | Ex. 2 (Composition 2) | Ex. 3 (Composition 3) | Comp. Ex. 1 (Composition 4) | Comp. Ex. 2 (Composition 5) | Comp. Ex. 3 (Composition 6) |
|---|---|---|---|---|---|---|
| Appearance | Transparent | Transparent | Transparent | Transparent | Transparent | Cloudy |
| Hardness | 72 | 72 | 43 | 71 | 72 | 48 |
| Adhesion | 2.2 (Cohesive Failure) | 2.0 (Cohesive Failure) | 1.6 (Cohesive Failure) | 0.2 (Peeling) | 0 (Peeling) | 0.4 (Cohesive Failure) |
| Shock Resistance | No Change | No Change | No Change | No Change | No Change | Cracks |

Silicone Resin Compositions 1 to 3 of the present invention that included Components (A) to (E) as essential components, after being cured, exhibited hardness and strength sufficient to withstand external shocks, were capable of self-adhering to the ETFE films, and had high transparency (Examples 1 to 3).
In contrast, Silicone Resin Compositions 4 to 6 of Comparative Examples 1 to 3, which lacked any of Components (A) to (E) of the present invention, had poor adhesion (Comparative Examples 1 and 2); and Composition 6 of Comparative Example 3 had low transparency and subjected to cracking.

## Claims

1. A silicone resin composition for solar cell modules comprising:
(A) an organopolysiloxane in a liquid state with a viscosity at 25°C of 10,000 mPa·s or more or in a solid state, which is represented by the following average composition formula (1):
R¹ₙ(C₆H₅)ₘSiO[_{(4-n-m)/2}] (1)
wherein each R¹ is the same or different, and is a substituted or unsubstituted monovalent hydrocarbon group; 0.1 to 80 mol% of all of R¹ are alkenyl groups; and n and m are each positive numbers that satisfy 1.0 ≤ n+m < 2.0 and 0.2 ≤ m/(n+m) ≤ 0.95: 100 mass parts;
(B) an organohydrogenpolysiloxane containing, in each molecule, at least two hydrogen atoms bonded to a silicon atom, represented by the following average composition formula (2):
R²ₐH_{b}SiO[_{(4-a-b)/2}] (2)
wherein each R² is the same or different, and is a substituted or unsubstituted monovalent hydrocarbon group excluding an aliphatic unsaturated hydrocarbon group; and a and b are each positive numbers that satisfy 0 ≤ a < 4, 0 < b < 4, and 0 < a+b < 4: an amount such that the number of the hydrogen atoms bonded to a silicon atom in Component (B) is 0.5 to 5.0 per alkenyl group of the organopolysiloxane as Component (A);
(C) a hydrosilylation reaction catalyst: an effective amount;
(D) a (meth)acryloxyalkyl group-containing organic silicon compound: 0.01 to 10 mass parts; and
(E) an epoxy group-containing organic silicon compound: 0.01 to 10 mass parts.

2. The silicone resin composition for solar cell modules according to claim 1, further comprising:
(F) an organopolysiloxane represented by the following general formula (3):
CH₂=CHR³₂SiO[R⁴₂SiO]ₙ,SiR³₂CH=CH₂ (3)
wherein R³ and R⁴ each independently represent a methyl or phenyl group; at least 10 mol% of R⁴ are phenyl groups; and n' is an integer of 3 or more: 0 to 200 mass parts per 100 mass parts of Component (A).

3. The silicone resin composition for solar cell modules according to claim 1 or 2, wherein Component (D) is a (meth)acryloxyalkyl-modified organopolysiloxane having a viscosity at 25°C of 5 to 10,000 mPa·s, and having a linear or cyclic organopolysiloxane structure.

4. A solar cell module comprising solar cells sealed with a cured product of the silicone resin composition for solar cell modules according to any one of claims 1 to 3.

5. A solar cell module comprising a coating of a cured product of the silicone resin composition for solar cell modules according to any one of claims 1 to 3, the coating being formed on at least one surface of an outer layer material.

## Patentansprüche

1. Silikonharzzusammensetzung für Solarzellenmodule, umfassend:
(A) ein Organopolysiloxan in einem flüssigen Zustand mit einer Viskosität bei 25°C von 10 000 mPa·s oder mehr oder in einem festen Zustand, welches durch die folgende durchschnittliche Zusammensetzungsformel (1) angegeben ist:
R¹ₙ(C₆H₅)ₘSiO[_{(4-n-m)/2}] (1)
worin jedes R¹ dasselbe oder verschieden ist und eine substituierte oder unsubstituierte monovalente Kohlenwasserstoffgruppe ist; 0,1 bis 80 Mol-% von allen von R¹ Alkenylgruppen sind; und n und m jeweils positive Zahlen sind, welche 1,0 ≤ n+m < 2,0 und 0,2 ≤ m/(n+m) ≤ 0,95: 100 Massenteile genügen;
(B) ein Organohydrogenpolysiloxan, enthaltend in jedem Molekül mindestens zwei Wasserstoffatome, die an ein Siliciumatom gebunden sind, angegeben durch die folgende durchschnittliche Zusammensetzungsformel (2):
R²ₐH_{b}SiO[_{(4-a-b)/2}] (2)
worin jedes R² dasselbe oder verschieden ist und eine substituierte oder unsubstituierte monovalente Kohlenwasserstoffgruppe ist, ausgeschlossen eine aliphatische ungesättigte Kohlenwasserstoffgruppe; und a und b jeweils positive Zahlen sind, welche 0 ≤ a < 4, 0 < b < 4 und 0 < a+b < 4 genügen: eine Menge, so dass die Zahl der Wasserstoffatome, die an ein Siliciumatom in der Komponente (B) gebunden ist, 0,5 bis 5,0 pro Alkenylgruppe des Organopolysiloxans als Komponente (A) beträgt;
(C) ein Hydrosilylierungsreaktionskatalysator: eine wirksame Menge;
(D) eine (Meth)acryloxyalkylgruppen-haltige organische Siliciumverbindung: 0,01 bis 10 Massenteile; und
(E) eine Epoxygruppen-haltige organische Siliciumverbindung: 0,01 bis 10 Massenteile.

2. Silikonharzzusammensetzung für Solarzellenmodule gemäß Anspruch 1, weiter umfassend:
(F) ein Organopolysiloxan, angegeben durch die folgende allgemeine Formel (3):
CH₂=CHR³₂SiO[R⁴₂SiO]_{n'}SiR³2CH=CH₂ (3)
worin R³ und R⁴ jeweils unabhängig eine Methyl- oder Phenylgruppe repräsentieren; wenigstens 10 Mol-% von R⁴ Phenylgruppen sind; und n' eine ganze Zahl von 3 oder mehr ist: 0 bis 200 Massenteile pro 100 Massenteile von Komponente (A) ist.

3. Silikonharzzusammensetzung für Solarzellenmodule gemäß Anspruch 1 oder 2, wobei die Komponente (D) ein (Meth)acryloxyalkyl-modifiziertes Organopolysiloxan mit einer Viskosität bei 25°C von 5 bis 10 000 mPa·s ist und eine lineare oder cyclische Organopolysiloxanstruktur aufweist.

4. Solarzellenmodul, umfassend Solarzellen, die mit einem gehärteten Produkt aus der Silikonharzzusammensetzung für Solarzellenmodule gemäß einem der Ansprüche 1 bis 3 versiegelt sind.

5. Solarzellenmodul, umfassend eine Beschichtung eines gehärteten Produkts aus der Silikonharzzusammensetzung für Solarzellenmodule gemäß einem der Ansprüche 1 bis 3, wobei die Beschichtung auf wenigstens einer Oberfläche eines Außenschichtmaterials gebildet ist.

## Revendications

1. Composition de résine de silicone pour des modules de piles photovoltaïques comprenant :
(A) un organopolysiloxane dans un état liquide avec une viscosité à 25 °C de 10 000 mPa·s ou plus ou dans un état solide, qui est représenté par la formule de composition moyenne (1) suivante :
R¹ₙ(C₆H₅)ₘSiO[_{(4-n-m)/2}] (1)
dans laquelle chaque R¹ est identique ou différent, et est un groupe hydrocarbure monovalent substitué ou non substitué ; 0,1 à 80 % en moles de tous les R¹ sont des groupes alcényle ; et n et m sont chacun des nombres positifs qui satisfont à 1,0 ≤ n+m < 2,0 et 0,2 ≤ m/(n+m) ≤ 0,95 : 100 parties en masse ;
(B) un organohydrogénopolysiloxane contenant, dans chaque molécule, au moins deux atomes d'hydrogène liés à un atome de silicium, représenté par la formule de composition moyenne (2) suivante :
R²ₐH_{b}SiO[_{(4-a-b)/2}] (2)
dans laquelle chaque R² est identique ou différent, et est un groupe hydrocarbure monovalent substitué ou non substitué à l'exclusion d'un groupe hydrocarbure insaturé aliphatique ; et a et b sont chacun des nombres positifs qui satisfont à 0 ≤ a < 4, 0 < b < 4, et 0 < a+b < 4 : une quantité telle que le nombre des atomes d'hydrogène liés à un atome de silicium dans le Composant (B) est 0,5 à 5,0 par groupe alcényle de l'organopolysiloxane comme Composant (A) ;
(C) un catalyseur de réaction d'hydrosilylation : une quantité efficace ;
(D) un composé de silicium organique contenant un groupe (méth)acryloxyalkyle : 0,01 à 10 parties en masse ; et
(E) un composé de silicium organique contenant un groupe époxy : 0,01 à 10 parties en masse.

2. Composition de résine de silicone pour des modules de piles photovoltaïques selon la revendication 1, comprenant en outre :
(F) un organopolysiloxane représenté par la formule générale (3) suivante :
CH₂=CHR³₂SiO[R⁴₂SiO]_{n'}SiR³₂CH=CH₂ (3)
dans laquelle R³ et R⁴ représentent chacun indépendamment un groupe méthyle ou phényle ; au moins 10 % en moles de R⁴ sont des groupes phényle ; et n' est un entier de 3 ou plus : 0 à 200 parties en masse pour 100 parties en masse de Composant (A).

3. Composition de résine de silicone pour des modules de piles photovoltaïques selon la revendication 1 ou 2, dans laquelle le Composant (D) est un organopolysiloxane modifié avec un (méth)acryloxyalkyle ayant une viscosité à 25 °C de 5 à 10 000 mPa·s, et ayant une structure d'organopolysiloxane linéaire ou cyclique.

4. Module de piles photovoltaïques comprenant des piles photovoltaïques scellées avec un produit durci de la composition de résine de silicone pour des modules de piles photovoltaïques selon l'une quelconque des revendications 1 à 3.

5. Module de piles photovoltaïques comprenant un revêtement d'un produit durci de la composition de résine de silicone pour des modules de piles photovoltaïques selon l'une quelconque des revendications 1 à 3, le revêtement étant formé sur au moins une surface d'un matériau de couche extérieure.
